# EUROPEAN PATENT APPLICATION

(11) **EP 0 547 225 A1**
(43) Date of publication of application: **23.06.1993**
(21) Application number: 91918907.6
(22) Date of filing: 29.10.1991
(51) Int. Cl.: G05B 19/405

(54) **METHOD FOR EDITING SHAPE**

(30) Priority: 01.11.1990 JP 293534/90
(71) Applicant: FANUC LTD., Minamitsuru-gun, Yamanashi 401-05 (JP)
(72) Inventor: SEKI, Masaki, Suginami-ku, Tokyo 168 (JP); TAKEGAHARA, Takashi, Hachioji-shi, Tokyo 192-01 (JP); HAYANAGI, Shizuaki, Fanuc Dai-3Vira-karamatsu, Minamitsuru-gun, Yamanashi 401-05 (JP); SUZUKI, Kohji, Fanuc Dai-3Vira-karamatsu, Minamitsuru-gun, Yamanashi 401-05 (JP)
(74) Representative: Billington, Lawrence Emlyn
(86) International application number: JP9101477
(87) International publication number: WO9208174

(57) **Abstract**

A method for editing shapes which can move and copy a shape easily and rapidly. A product is displayed on the screen of a display (14). The part to be moved or copied of the shape of the product and one of the shape elements constituting the shape part are selected with a cursor successively. Then, four arrows, representing the tangential and normal directions of the selected shape element respectively, are displayed on the screen. Also, the desired direction of movement of the shape part is selected by specifying an arrow on the screen with the cursor, and the desired quantity of movement is inputted via the keyboard (13). Then, a converting matrix which moves the shape part in the desired direction by the desired quantity, or copies the shape part to a place where the shape part is to be moved is determined. According to the converting matrix and the shape data which represents the shape part to be moved or copied, new shape data is calculated by a processor (10). The new shape data represent the shape part after moving or a shape part to be generated newly. Then, according to the new shape data and the shape data, which represents the shape part other than the shape part to be moved or copied or represents the whole of the shape of the product, the movement or copy of the shape is performed.

## Description

### Technical Field

The present invention relates to a profile edit method in a device including a graphic information processing function, in particular, to the method capable of simply and rapidly performing the profile edit.

### Background Art

In a device with graphic information processing function such as the CAD/CAM system to function on the graphic information obtainable through the interactive communication with the computer and the automatic programming system for automatically preparing the NC program including the profile definition, the profile edit function, which enables any part of defined or prepared profile (or figure) to be moved to any specified position or to be copied on any specified position, is carried out. When performing such profile editing, conventionally, it was required that an operator manually inputs the information concerning the amount of horizontal movement to destination ΔX and/or amount of vertical movement to destination ΔY of partial profile to be moved or copied, or the information concerning the destination of the representative point of the partial profile into the CAD/CAM system or the automatic programming device. Thus, in carrying out the profile edit, the operator had to calculate the amount of movement to destination ΔX and/or ΔY or the specified destination of the representative point of the partial profile, so, a considerable labor was required for profile editing to the operator.

### Disclosure of the Invention

An object of the present invention is to provide a simplified and efficient profile edit method using a device with graphic information processing function.

To achieve the above object, the profile edit method using the device with graphic information processing function according to the present invention comprises the steps of (a) displaying two tangential- and and two normal-line directions of a profile element when such profile elements as one of profile elements constituting a portion of profile to be edited in a the profile displayed on the screen of the device is manually selected; and (b) performing the profile edit of the portion of profile based on the selected direction and the amount of destination-oriented movement when any desired one of four directions displayed is selected manually and the amount of destination-oriented movement in the selected direction of the selected profile element is manually inputted.

As mentioned above, according to the present invention, the profile edit can be accomplished by manually selecting one of the directions of the two tangential lines and of the two normal lines of a selected profile element displayed on the screen and also by manually inputting the amount of movement of the selected profile element in the selected directions, in response to the manual selection of one of the profile elements of the portion of the profile to be edited out of the profile displayed on the display screen. Thus, unlike the conventional method, even when moving the portion of the profile in oblique direction on the CRT screen for the profile edit, the amounts of horizontal and vertical movements to destinations or the position of the movement to the destination of the representative point need not be calculated, thereby making the profile edit simpler and quicker.

### Brief Description of the Drawings

Fig. 1 is a schematic block diagram showing an automatic programming device for carrying out a profile edit method according to an embodiment of the present invention;
Fig. 2 is a flowchart showing a part of a profile edit procedure to be carried out by the automatic programming device;
Fig. 3 is a diagram showing an example of a display on the screen of the automatic programming device when a profile move procedure is selected at the start of the profile edit procedure;
Fig. 4 is a diagram showing the content of display just after the portion of profile to be moved is designated in the profile move procedure;
Fig. 5 is a diagram showing the content of display just after one of profile elements constituting the portion of profile is designated;
Fig. 6 is a diagram showing the content of display just after a move direction of the profile portion is designated; and
Fig. 7 is a diagram showing the content of display after the profile move procedure is accomplished.

### Best Mode of Carrying Out the Invention

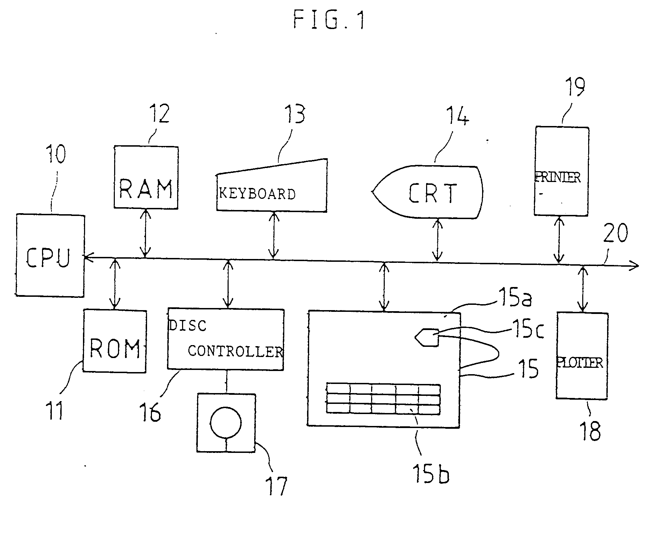

As shown in Fig. 1, an interactive-mode automatic programming device includes a processor (CPU) 10, a read- only memory (ROM) 11 for storing a control program for controlling an operation of the programming device, a random-access memory (RAM) 12 for storing various programs and data or the like. Further, the programming device includes a keyboard 13 having character keys, ten keys and various command keys, a graphic display (CRT) 14 having a CRT screen, a digitizing tablet 15, which will be described later in detail, and a disc controller 16 to permit the free loading of floppy disc 17 for storing various system programs registered in advance. A reference numeral 18 denotes a plotter for outputting a prepared drawing, and a reference numeral 19 a printer. The elements 11 to 16, 18 and 19 are connected to the CPU 10 through a bus 20.

The programming device is operated according to various operation modes including a profile data input mode, which permits the operator to manually input various product profile data to the programming device through the keyboard 13, the CRT 14 or the like; a profile edit mode, which will be described later in details, for moving or copying profiles or a part thereof displayed on the CRT screen, based on the product profile data; a part program preparing mode, which permits operator to prepare the part program by interacting with the programming device through the keyboard 13, the CRT 14 or the like; and a NC data preparing mode for automatically preparing the NC data (NC program) based on the part program. The product profile data, part program and NC data are registered in the floppy disk 17, and these data (system programs, the product profile data, part program and NC data registered in the floppy disk 17) are then transmitted to the RAM 12.

The digitizing tablet 15 includes a screen area 15a corresponding to the CRT screen, a menu table 15b containing various menu items such as "profile edit", "profile move", and "profile copy", and a tablet cursor 15c capable of freely moving on the screen area 15a and the menu table 15b. To designate the profile or the portion thereof or profile element constituting the profile which is displayed on the screen, the operator moves the tablet cursor 15c on the screen area 15a so that the CRT cursor interlocked with the cursor 15c is caused to move on the CRT screen for designation, or the operator moves the tablet cursor 15c on the menu table 15b to specify any desired menu item. Thus, a pick-out input button (not shown) for picking out a designated profile and menu item is provided for the tablet cursor 15c.

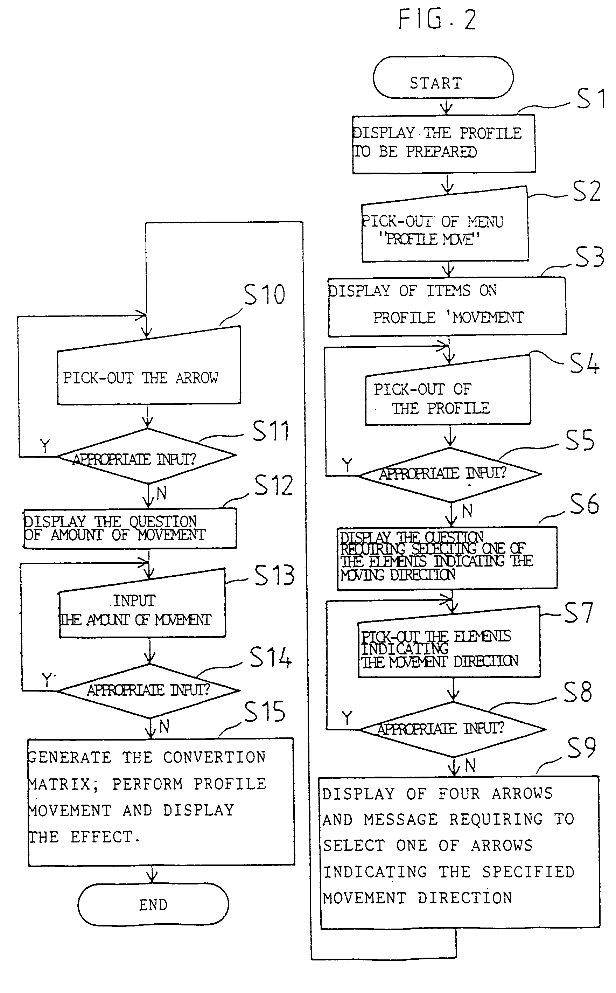

A profile edit process by the programming device will be described with reference to Figs. 2 through 7.

When the power source of the programming device is turned on, the programming device will be operated according to the system programs transmitted from the floppy disk 17 to the RAM 12.

When carrying out the profile edit procedure, the operator sets the tablet cursor 15c to the position of the "profile edit" on the menu table 15b and then picks out "profile edit" position by operating the pick-out input button. The operation mode of the programming device is set to the profile edit mode in response to the pick-out input, whereby the profile data of various products are transmitted from the floppy disk 17 to the RAM 12, and the profile edit process is started according to the control of CPU 10.

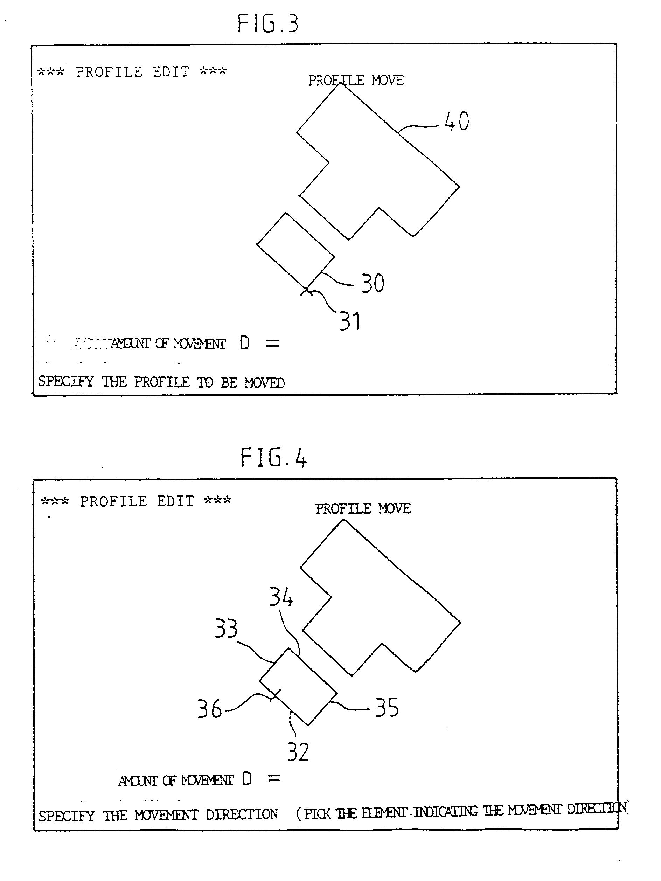

More particularly, when the operator inputs a product number indicating a product profile as an object of profile edit into the programming device through the keyboard 13, the product profile is described on the screen of the CRT 14 based on the product profile data corresponding to the product number. For example, as shown in Fig. 3, a profile comprising the first portion 30 of profile and the second portion 40 of profile is described. Further, the header of "***profile edit***" is displayed at upper left position on the CRT screen, while the message (not shown) requiring to select one of the menu items "profile move" or "profile copy" is displayed in the message column at lower left position on the CRT screen (see Step S1 in Fig. 2).

In response to the message requiring the selection of the menu, the operator picks out the item "profile move" or "profile copy". When the pick-out input for the item "profile move" is detected by the CPU 10 (Step S2), the header of "profile move" is displayed at the upper center position on the CRT screen, while the message of "specify the profile to be moved" (as shown in Fig. 3) requiring to specify the profile to be moved or a part thereof (hereinafter, referred to as the portion of profile to be moved) is displayed at the message column (Step S3). After the display operation is completed, the CPU 10 enters standby state.

In response to the message requesting to specify the profile to be moved, the operator moves the graphic cursor to the representative point (for example, representative point 31 of the first portion 30 of profile shown in Fig. 3) or to the vicinity thereof by operating the tablet cursor 15c, and then specifies the portion of profile to be moved by picking out the representative point 31. When the pick-out input of the representative point 31 is detected at Step S4, the CPU 10 determines whether or not the profile to be moved is properly specified (Step S5). If the specification of the profile to be moved is not appropriate, an error message requiring the respecification of the portion of profile to be moved is displayed on the CRT screen. On the other hand, when the specification of the profile to be moved is judged to be appropriate at Step S5, the message "specify the move direction" (shown in Fig. 4) requiring to specify the direction of the movement of the portion of profile to be moved for its destination is displayed in the message column (Step S6).

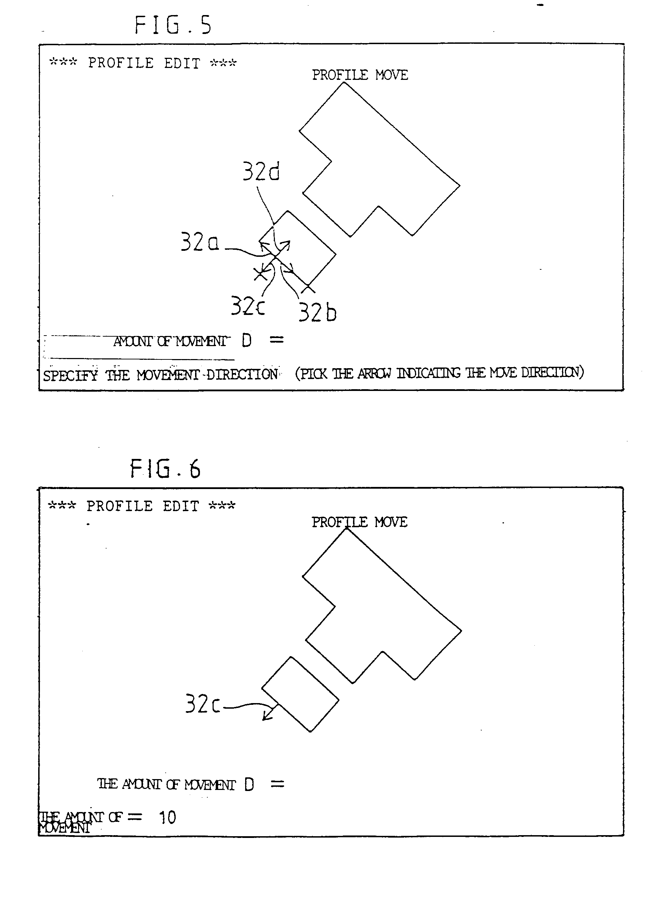

Furthermore, in response to the message requiring to specify the direction of movement, the operator moves the graphic cursor to the profile element (for example, a profile element 32 is selected among profile elements 32 through 35 which constitute the profile portion 30) of the profile portion 30 which is convenient for specifying the destination-oriented movement direction of the portion 30 or to the vicinity thereof and then executes the pick-out operation, whereby the profile elements can be specified or selected. When the pick-out input for the profile element 32 is detected at Step S7, the CPU 10 determines whether or not the specification of the profile elements is appropriate (Step S8). If the specification of the profile elements is not appropriate, an error message requiring the respecification of the profile elements is displayed. On the other hand, if the specification of the profile elements is appropriate, as shown in Fig. 5, four arrows 32a through 32d indicating the two tangential- and two normal-line directions of the profile element 32 at the intersecting point of a perpendicular line 36 drawn from the pick-out position to the selected profile element 32 and the selected profile line, which starts from the intersecting point, are displayed respectively. Then, a message "specify a move direction" (Fig. 5) further requiring the destination-oriented direction of movement of the profile portion to be moved is displayed on the message column (Step S9).

In response to the massage, the operator moves the graphic cursor to any desired one of four arrows 32a through 32d (for example, an arrow 32c) or to the vicinity thereof and then executes the pick-out operation, whereby the destination-oriented direction of movement is specified or selected. When the pick-out input of the destination-oriented direction of movement is detected (Step S10), the CPU 10 determines whether or not the direction of movement is appropriate (Step S11). If the direction of movement is not appropriate, an error message requiring the respecification of the destination-oriented direction of movement is displayed. On the other hand, if the specified direction of movement is appropriate, only the arrow 32c indicating the destination-oriented direction of movement is displayed as shown in Fig. 6, and the message requiring to input the amount of movement in the destination-oriented direction for the portion 30 of the profile is then displayed (Step S12).

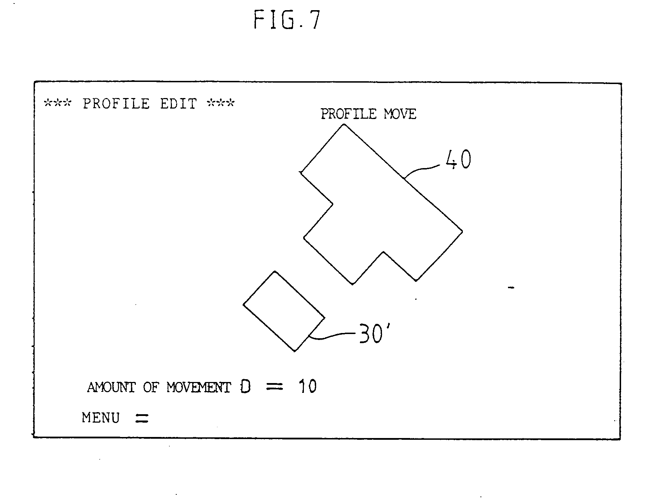

When the CPU10 detects that the amount of movement required to get to the destination has been manually inputted by the operator through the keyboard 13, in response to the message requiring to input the amount of movement, the CPU 10 determines whether or not the inputted amount of movement is appropriate (Step S14). If the input of the amount of destination-oriented movement is inappropriate, an error message requiring the re-input of the amount of destination-oriented movement is displayed. On the other hand, if the input of of the amount of movement is appropriate, the CPU 10 generates the conversion matrix for moving the first portion 30 of profile to the destination-oriented direction 32c by only 10 mm and then calculates the new profile data to generate the first portion 30' of profile (Fig. 7) resulting from the movement, based on the original profile data to generates the first portion 30 of profile and the conversion matrix. Further, the CPU 10 rewrites the original profile data stored in the RAM 12 into a new profile data and then generates the new first portion 30' of profile and the second portion 40 of profile on the CRT screen, based on the new profile data and the profile data corresponding to the second portion 40 of profile (Step S15) to complete the profile movement procedure shown in Fig.2. When necessary, a profile data for generating the new product profile comprising the first portion 30' of profile and the second portion 40 of profile, which will be assigned new product number and registered in the floppy disk 17.

When the operator picks out the menu item of "profile copy" in response to the message requiring the selection from the menu displayed at the above Step S1, the profile copy procedure almost identical to the above profile movement procedure will be executed by the CPU.

That is, in the profile copy procedure, when the operator specifies appropriate portion of profile to be copied in response to the message requiring to specify the profile to be copied, which will be displayed together with the header "profile copy" in picking out the menu item "profile copy", the message requiring to specify the destination-oriented direction of movement for the portion of profile to be copied is displayed. Next, when one of four arrows indicating the tangential- and normal-line directions of the profile element, which are displayed on the CRT screen in response to operator's selection of the profile element, is selected, a message requiring to input the amount of destination-oriented movement of the portion of profile in the direction of destination is displayed. Then, when the amount of destination-oriented movement is properly inputted, the CPU 10 calculates the new profile data for generating portions of profile to be newly generated based on the conversion matrix for copying the portion of profile at the position reached by moving the portion of profile to be copied by the amount of destination-oriented movement and the original profile data for generating the portion of profile to be copied and then generates the original product profile and the new portion of profile on the CRT screen based on the new profile data and a profile data corresponding to the entire original product profile to complete the profile copy procedure. Unlike the profile moving procedure in which original profile data corresponding to the portion of profile to be moved is deleted, in the profile copy procedure, the original profile data corresponding to the portion of profile to be copied is not deleted.

The present invention allows various modifications without limiting the range of the above embodiment.

The present invention is applied to the automatic programming device in the embodiment, but the present invention is also applicable to other devices having a graphic information processing function such as a CAD/CAM system or the like.

In the above embodiment, when the profile element is selected in response to the message requiring to specify the direction of movement, the four arrows, which represent the tangential-line and normal-line directions of the profile element and extend from the intersecting point of the normal line drawn from the pick-up position to the profile element and the profile element are displayed, however, when the profile element is a straight line and the tangential- and normal-line directions of the profile element have no reference to the pick-out position, the four arrows may be displayed at any position on the profile element.

Furthermore, in the above embodiment, when specifying the direction of movement, one of profile elements constituting the portion of profile to be moved or the portion of profile to be copied is selected; however, as far as the direction of movement of the portion of profile can be specified, any one of profile elements constituting the product profile displayed on the screen together with the portions of the profile to be moved or copied and other portions may also be selected.

## Claims

1. A profile edit method in a device including a graphic information processing function, comprising the steps of;
(a) displaying two tangential- and two normal-line directions of a profile element then such profile element as one of profile elements constituting a portion of profile to be edited in a profile displayed on a screen of the device is manually selected ; and
(b) performing the profile editing of said portion of profile based on the selected direction and the amount of destination-oriented movement when any desired one of said displayed four directions is manually selected and the amount of destination-oriented movement in said selected direction of said selected profile element is manually inputted.

2. A profile edit method according to claim 1, wherein said profile edit method includes at least one of said profile moving function for moving the portion of profile in the selected direction by said amount of destination-oriented movement and a profile copy function for copying the portion of profile at the position reached by moving said portion of profile by the amount of destination-oriented movement in said selected direction.

3. A profile edit method according to claim 1, wherein said one profile element is selected by manually specifying the position on the profile element or in the vicinity thereof.

4. A profile edit method according to claim 3, wherein two tangential- and two normal-line directions of the selected profile element originating from the intersecting point of a normal line drawn from the manually selected position to the selected profile element and the selected profile element line are displayed.
